(19) Europäisches Patentamt
European Patent Office
Office européen des brevets

(11) Publication number: **0 121 241**
**B1**

(12) # EUROPEAN PATENT SPECIFICATION

(45) Date of publication of patent specification: **09.03.88**

(51) Int. Cl.$^4$: **C 08 G 79/10**

(21) Application number: **84103455.6**

(22) Date of filing: **29.03.84**

(54) **Process for the production of high molecular weight organoaluminum polymers.**

(30) Priority: **30.03.83 JP 56266/83**
**07.05.83 JP 79837/83**
**02.11.83 JP 206815/83**

(43) Date of publication of application:
**10.10.84 Bulletin 84/41**

(45) Publication of the grant of the patent:
**09.03.88 Bulletin 88/10**

(84) Designated Contracting States:
**BE CH DE FR GB IT LI NL SE**

(56) References cited:
**DE-B-1 040 529**
**DE-C- 966 973**
**GB-A- 825 878**
**US-A-2 910 494**
**US-A-2 979 497**

(73) Proprietor: **IDEMITSU KOSAN COMPANY LIMITED**
**No. 1-1, 3-chome, Marunouchi Chiyoda-ku**
**Tokyo (JP)**

(72) Inventor: **Taniguchi, Isoji**
**No. 36, Tojiin-minami-machi**
**Kita-ku Kyoto-shi Kyoto-fu (JP)**
Inventor: **Kimura, Yoshiharu**
**No. 1126, Takakai-cho**
**Ohmihachiman-shi Shiga-ken (JP)**
Inventor: **Ichimura, Toshiaki**
**No. 7-5, 5-chome Hattorinishi-machi**
**Toyonaka-shi Osaka-fu (JP)**

(74) Representative: **Türk, Dietmar, Dr. rer. nat. et al**
**Türk, Gille + Hrabal Patentanwälte Bruckner Strasse 20**
**D-4000 Düsseldorf 13 (DE)**

**EP 0 121 241 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The present invention relates to a process for producing a high molecular weight organoaluminum polymer by reacting at least one organoaluminum compound with water in the presence of organic acids at temperatures of not more than 200°C, to obtain high-grade polymers which can be used as valuable starting materials for the production of alumina fibers having a high strength and a super heat resistance.

Materials of high strength and super heat resistance have recently been desired in various industrial fields. Among such materials are alumina fibers which are suitable for use in fabrication of composite materials in combination with metals, ceramics and so forth.

A method of calcining fiber precursors made of organoaluminum polymers has received increasing attention for the production of superior alumina fibers. However, a method has not been developed yet which enables to produce with ease and further with high efficiency high molecular weight organoaluminum polymers which are suitable for use in production of such fiber precursors. That is, although it is known that organoaluminum polymers can be prepared by reacting organoaluminum compounds with water, high molecular weight organoaluminum polymers suitable for use in preparing, e.g., fibers are difficult to produce by conventional procedures.

DE—C—966 973 discloses the reaction of aluminum alkoxides with an excess of organic acids thereby producing organoaluminum compounds having alkoxy and acyloxy groups. These compounds are further reacted in the presence of an excess of the organic acids with water. However, in this known process an aluminum alcoholate as organoaluminum compound is first reacted with an organic acid such as capric acid, then the resulting substance is treated with water. A polymer having a high-molecular weight cannot be obtained according to this known process. In fact, the reduced viscosity of the polymer obtained according to the process disclosed in the above document is smaller than that obtained according to the present invention. Both, the US—A—2 9794797 and the GB—A—825 878 teach the preparation of polymeric organoaluminum compounds by the reaction of aluminum alkoxides with water in the presence of organic acids. In the former process an aluminum alkoxide is used as starting material having no acyloxy group. Furthermore, the polymer obtained in this known process is a cyclic aluminum oxide polymer which cannot be used for the preparation of alumina fibers. In the latter process, too, an aluminum alkoxide is used as starting material and the products obtained therein are useful in producing improved technical progress such as lubricating greases, thickened or modified mineral oils, but not for the production of alumina fibers.

An object of the present invention is to provide a process for efficiently producing high molecular weight organoaluminum polymers suitable for use in preparing, e.g., fibers.

The present invention relates to a process for producing a high molecular weight organoaluminum polymer by reacting at least one organoaluminum compound with water in the presence of organic acids at temperatures of not more than 200°C, which is characterized in that an organoaluminum compound represented by the general formula

$$\begin{array}{c} X-Al-Y \\ | \\ OCOR^1 \end{array} \qquad (I)$$

(wherein X and Y may be the same or different and are each a hydrogen atom, an alkyl group, an alkoxy group, or an acyloxy group, and $R^1$ is an organic radical) is reacted with water and

a) an organic acid (excluded formic acid) is added during this reaction, or

b) an organic acid (excluded formic acid) is added after this reaction to the reaction system or to the polymer formed, or

c) a part of an organic acid (excluded formic acid) is added during this reaction and the remainder is added after completion of this reaction,

in an amount such that the total amount of the organic acid and the acyloxy group contained in the organoaluminum compound is from 1.2 to 11 moles per mole of the organoaluminum compound.

According to the process of the invention high-polymerizates can be achieved and the resulting products are high-grade polymers. If organoaluminum compounds and water are reacted without adding the organic acid after the reaction of organoaluminum compound and water, no such qualities can be achieved. However, if the organic acid is added according to the invention after the reaction of the organoaluminum compound and water or at a stage where the reaction proceeds to some extent, the polymerization degree becomes far higher and it is possible to obtain an organoaluminum polymer of higher molecular weight. This can be seen from Examples 6 and 13, below, where the reduced viscosity of the polymer obtained is 5.05. Further, reference is made to the polymer of Example 10 below having a reduced viscosity of 0.76. Example 10 has also been carried out according to the invention. Example 11 is comparable with Example 10 in view of the used starting materials and the way of proceeding. In accordance with the present invention organic acid is added to the polymer solution produced in Example 10. It can be seen that high polymerization is achieved obtaining a polymer with a reduced viscosity of 0.98. This clearly shows the advantage of the present invention, which has not been obvious from the prior art.

The organoaluminum compounds as used

herein, as described above, have the following general formula

$$\begin{array}{c} X\text{—Al—}Y \\ | \\ OCOR^1 \end{array} \qquad (I)$$

(wherein X and Y may be the same or different and are each a hydrogen atom, an alkyl group, an alkoxy group, or an acyloxy group, and $R^1$ is an organic radical).

The alkyl group represented by X and Y includes a methyl group, an ethyl group, a n-propyl group, an isopropyl group, a n-butyl group and its isomers (e.g., an isobutyl group, a sec-butyl group, and a tert-butyl group) a n-pentyl group and its isomers, and a n-hexyl group and its isomers.

The alkoxy group includes a methoxy group, an ethoxy group, a n-propoxy group, an iso-propoxy group, a n-butoxy group and its isomers, a n-pentoxy group and its isomers, and a n-hexanoxy group and its isomers.

In addition, X and Y represent acyloxy groups. When Y is an acyloxy group, the organoaluminum compounds of the present invention are represented by the general formula (II):

$$\begin{array}{c} X\text{—Al—}OCOR^2 \\ | \\ OCOR^1 \end{array} \qquad (II)$$

When X and Y are both acyloxy groups, the organoaluminum compounds are represented by the general formula (III):

$$\begin{array}{c} R^3COO\text{—Al—}OCOR^2 \\ | \\ OCOR^1 \end{array} \qquad (III)$$

In the general formulae (II) and (III), $R^2$ and $R^3$ each represent the same organic radical as for $R^1$. $R^1$, $R^2$ and $R^3$ may be the same or different. The organic radical includes a saturated or unsaturated aliphatic substituent, an alicyclic substituent, and an aromatic substituent.

Specifically the saturated aliphatic substituent includes a methyl group, an ethyl group, a n-propyl group, an isopropyl group, a n-butyl group and its isomers, a n-pentyl group and its isomers, and a n-nonyl group and its isomers.

The alicyclic substituent includes a cyclohexyl group.

The unsaturated aliphatic substituent includes an alkenyl group (e.g., a vinyl group, an allyl group, and a crotyl group), a two- or threefold unsaturated hydrocarbon group (e.g., a butadienyl group and an octatrienyl group), and an alkinyl group (e.g., an ethinyl group and a propinyl group).

The aromatic substituent includes various aryl groups such as a phenyl group, a tolyl group, an anisyl group, and a naphthyl group.

The saturated aliphatic substituent, unsaturated aliphatic substituent, alicyclic substituent, and aromatic substituent may contain at least one radical, such as a chlorine atom, an amino group, a hydroxyl group, a carboxyl group, an alkoxy group, and an aryl group.

In the process of the present invention, a mixture of two or more organoaluminum compounds in which $R^1$, $R^2$ and $R^3$ are different can be used.

In accordance with the process of the present invention, organic acids are added in the reaction of the organoaluminum compounds represented by the formula (I) and water. Most of the known organic acids can be used in the present invention. Suitable examples are saturated or unsaturated aliphatic monocarboxylic acids (excluding formic acid), alicyclic carboxylic acids, aromatic monocarboxylic acids, dicarboxylic acids, hydroxycarboxylic acids, and their derivatives containing a substituent or substituents in the main chain thereof.

Typical examples of the saturated aliphatic monocarboxylic acids are acetic acid, propionic acid, butyric acid, isobutyric acid, pivalic acid, octanoic acid, lauric acid, and stearic acid.

Typical examples of the unsaturated aliphatic monocarboxylic acids are acrylic acid, methacrylic acid, crotonic acid, and oleic acid.

A typical example of the alicyclic carboxylic acids is cyclohexanecarboxylic acid.

Typical examples of the aromatic monocarboxylic acids are succinic acid, glutaric acid, phthalic acid, and cyclohexanedicarboxylic acids.

Typical examples of the hydroxycarboxylic acids are glycolic acid, lactic acid, and mandelic acid.

Typical examples of the substituents of the above-described carboxylic acid derivatives are a chlorine atom, an amino group, a hydroxyl group, a carboxyl group, an alkoxy group, a phenyl group, and an aryl group.

The type of the organic acid to be added in the reaction of the organoaluminum compound and water is preferably determined as follows:

It is considered that amongst the organic radicals contained in the organoaluminum compound (i.e., $R^1$, $R^1$ and $R^2$ or $R^1$, $R^2$ and $R^3$) those radicals producing the corresponding acids ($R^1COOH$, $R^2COOH$, or $R^3COOH$) having the highest acidity remain in the final high molecular weight organoaluminum polymers. It is therefore preferred that organic acids identical to those corresponding to the organic radicals of the organoaluminum compound used herein or organic acids higher in acidity than those be used.

For example, when the organic radicals of the organoaluminum compound to be used in the reaction are a propionyl group and an undecyl group, since the corresponding organic acids are propionic acid and lauric acid, it is preferred that propionic acid of higher acidity or organic acids having an acidity higher than that of propionic acid be used as the organic acids. Typical examples of these organic acids include hexanoic acid, butyric acid, valeric acid, acetic acid, methacrylic acid, and acrylic acid. Although typical organic acids of the saturated or unsaturated aliphatic monocarboxylic acids are listed above, the present invention is not limited thereto.

In the present invention, the above-described organic acids may be used singly or in combination with each other.

In the practice of the present invention, the organoaluminum compound, water, and organic acid may be used as such or without use of any solvents. In general, however, it is preferred for them to be diluted with suitable organic solvents for convenience of handling and also for effective condensation polymerization. In particular, when solid acids are used as the organic acids, they are preferably used after dilution with organic solvents.

Any organic solvents can be used as long as they are capable of dissolving the organoaluminum compounds, water, and organic acids and, furthermore do not react therewith. Typical examples are hydrocarbon solvents such as benzene, toluene, xylene, tetralin, decalin, pentane, hexane, and heptane, ether solvents such as dioxane, diethyl ether, 1,2-dimethoxyethane, tetrahydrofuran, and anisol, tert-amine solvents such as pyridine, picoline, and triethylamine, and polar solvents such as dimethylsulfoxide and dimethylformamide.

In the condensation polymerization reaction of the organoaluminum compound and water, water may be added at once but it is preferred to gradually add dropwise. It is also convenient for handling that water is used in the form of solutions with suitable organic solvents. In the case of the organic acids, they may be added at once but it is preferred for them to gradually add dropwise as in the case of water.

The order in which the organoaluminum compound, water, and organic acid are added is critical in the process of the present invention.

With regard to the order of addition of the organic acid, it may be added in the course of the condensation polymerization between the organoaluminum compound and water, or after the condensation polymerization, or water may be added after the organic acid is added to the organoaluminum compound.

Furthermore, the organic acid can be added to the polymer formed by the condensation polymerization.

With regard to the amount of the organic acid to be added in the process of the present invention, the organic acid is added in an amount such that the total amount of the organic acid and the acyloxy group contained in the organoaluminum compound is from 1.2 to 11 moles, preferably from 1.4 to 3.5 moles per mole of the organoaluminum compound. If the organic acid is added within the range as defined above, there can be formed organoaluminum polymers which have an increased molecular weight and thus are suitable for use in production of fibers. If the amount of the organic acid added is too small, an increase in the molecular weight of the organoaluminum polymer due to the addition of the organic acid cannot almost be expected. On the other hand, even if the organic acid is added excessively, the molecular weight of the organoaluminum polymer is scarcely increased.

The amount of the organic acid being added is determined based on the total amount of the organic acid and the acyloxy group contained in the organoaluminum compound. Thus, when an organoaluminum compound having one acyloxy group is used, the organic acid itself is added in an amount of from 0.2 to 10 moles, preferably from 0.5 to 2.5 moles per mole of the organoaluminum compound. In a case where the organoaluminum compound contains two acyloxy groups as in the above-described general formula (II), the amount of the organic acid being added is determined as described above, and the organic acid itself is sufficient to be added in an amount ranging between 0.2 and 9 moles, preferably between 0.5 and 2.5 moles per mole of the organoaluminum compound. In a case where the organoaluminum compound contains three acyloxy groups as in the formula (III), the amount of the organic acid being added is also determined as described above, and the organic acid itself is sufficient to be added in an amount of from 0.2 to 8 moles, preferably from 0.5 to 2.5 moles per mole of the organoaluminum compound.

The amount of water to be used in the condensation polymerization of the organoaluminum compound is not critical and can be determined appropriately. Usually it is effective for the production of high molecular weight organoaluminum polymers that water be used in an amount from 1.0 to 3.5 moles per mole of the organoaluminum compound. Especially preferred is the range of from 1.0 to 2.0 moles per mole of the organoaluminum compound. If the amount of water added is too small, there cannot be formed high molecular weight organoaluminum polymers. On the other hand, if the amount of water added is too large, the condensation polymerization reaction is accelerated, resulting in the formation of organoaluminum polymers which are excessively polymerized and cross-linked and thus are insoluble in water. However, when at least one of X and Y in the formula (I) represents an alkoxy group, water can be added in an amount of less than 1.0 mole per mole of the organoaluminum compound, since water is formed in the condensation polymerization reaction.

The reaction temperature in the process of the present invention is not critical as long as it is not more than 200°C. Preferably the reaction temperature is chosen depending on the type of the organoaluminum compound, organic acid, or organic solvent. In commercial practice of the present invention, it is economical for the condensation polymerization reaction to be performed at a temperature ranging between about 0 and 60°C.

The organoaluminum polymers produced by the process of the present invention have a reduced viscosity of from 0.4 to 5.5 (solvent: a

mixed solvent of equal weights of tetrachloroethane and phenol; temperature: 30°C; concentration: 0.5 grams per deciliter); that is, they are high molecular weight polymers suitable for spinning and so forth.

On the other hand, in accordance with conventional methods even if the amount of water added is from 1.0 to 1.2 moles per mole of trialkyl aluminum such as triethyl aluminum, there can be formed only low molecular weight organoaluminum polymers having a reduced viscosity of 0.2 or less.

The present invention is described in greater detail with reference to the following Examples.

Example 1

A mixture of 15 grams (58 millimoles) of diisobutylaluminum 3-ethoxypropionate prepared from triisobutylaluminum and ethoxypropionic acid, and 30 milliliters of tetrahydrofuran was placed in a three-necked flask equipped with a dropping funnel, a reflux condenser, and a three-way cock, and 10 milliliters of a tetrahydrofuran solution containing 1.04 grams (58 millimoles) of distilled water and 3.44 grams (29 millimoles) of ethoxypropionic acid were gradually added dropwise thereto and reacted at room temperature in a nitrogen atmosphere while stirring with a magnetic stirrer. On allowing the reaction mixture to stand overnight at room temperature, there was formed a uniform, clear and viscous solution. This solution showed a good spinnability at room temperature, said spinnability being a measure of fibre-forming properties.

The solution was then poured into 500 milliliters of hexane and reprecipitated to yield 11.6 grams of a white organoaluminum polymer in a powder form. The reduced viscosity of the polymer as determined in a mixed solvent of equal weights of phenol and tetrahydrofuran (concentration: 0.5 gram per deciliter; temperature: 30°C) was 1.01.

Example 2

In the same atmosphere and apparatus as used in Example 1, 1.26 grams (70 millimoles) of water and 2.4 grams (12 millimoles) of lauric acid were added to a mixture of 16.5 grams (58 millimoles) of diethylaluminum laurate, which had been prepared by reacting triethylaluminum and lauric acid, and 30 milliliters of tetrahydrofuran, and reacted at 60°C. In several hours, the reaction mixture became a uniform, viscous solution. The tetrahydrofuran was distilled off under reduced pressure, and the residue was washed with hexane and dried, yielding 14 grams of a white organoaluminum polymer in a resin form.

The reduced viscosity of the polymer in tetrahydrofuran (concentration: 0.5 gram per deciliter; temperature: 30°C) was 2.41.

Example 3

The procedure of Example 2 was repeated wherein 6.03 grams (58 millimoles) of 3-methoxypropionic acid was used as the organic acid in place of lauric acid. On allowing the reaction mixture at 0°C for one day and night, a uniform, viscous solution was obtained as in Example 2. The solution was poured into a large amount of hexane to yield 13.5 grams of a white organoaluminum polymer in a powder form.

The reduced viscosity of the polymer in a mixed solvent of equal weights of phenol and tetrahydrofuran concentration: 0.5 gram per deciliter; temperature: 30°C) was 1.6.

Example 4

In the same atmosphere and apparatus as used in Example 1, 0.45 gram (25 millimoles) of water and 9.0 grams (125 millimoles) of propionic acid were added simultaneously to 5.8 grams (25 millimoles) of isopropoxy sec-butoxyaluminum propionate and 50 milliliters of a benzene solution and reacted at room temperature.

The reaction mixture was allowed to stand overnight and then poured into hexane and reprecipitated to yield 3.81 grams of a polymer. The reduced viscosity of the polymer in a mixed solvent of equal weights of phenol and tetrahydrofuran (concentration: 0.5 gram per deciliter; temperature: 30°C) was 0.77.

Example 5

In the same atmosphere and apparatus as used in Example 1, 0.68 gram (38 millimoles) of water and 3.05 grams (25 millimoles) of benzoic acid were added to 20 milliliters of a decalin solution containing a mixture of diisopropoxyaluminum benzoate and isopropoxy secbutoxyaluminum benzoate which had been prepared by reacting 5.45 grams (25 millimoles) of diisopropoxyaluminum sec-butoxide and 3.05 grams (25 millimoles) of benzoic acid, and reacted at 50°C. The reaction mixture was allowed to stand overnight at 50°C. Thereafter, the same procedure as in Example 4 was repeated to yield 5.3 grams of an organoaluminum polymer. The reduced viscosity of the polymer in dimethylformamide (concentration: 0.5 gram per deciliter; temperature: 30°C) was 3.1.

Example 6

In the same atmosphere and apparatus as used in Example 1, 10 milliliters of a tetrahydrofuran solution containing 1.04 grams (58 millimoles) of distilled water was gradually added dropwise at room temperature to 30 milliliters of a tetrahydrofuran solution containing 9.16 grams (58 millimoles) of diethylaluminum propionate prepared from triethyl aluminum and propionic acid. After the addition was completed, the mixture was stirred for several hours at the same temperature as above. Subsequently, 4.3 grams (58 millimoles) of propionic acid was added to the reaction mixture and was allowed to stand overnight at room temperature. The mixture became a viscous solution, and it was then reprecipitated in a large amount of hexane to yield 8.9 grams of a white organoaluminum polymer in a powder form.

The reduced viscosity of the polymer in a mixed solvent of equal weights of phenol and tetrachloroethane (concentration: 0.4 gram per deciliter; temperature: 30°C) was 5.05.

Example 7

In the same atmosphere and apparatus as used in Example 1, 10 milliliters of a tetrahydrofuran solution containing 0.45 gram (25 millimoles) of distilled water was gradually added dropwise at −78°C to a solution of 8.5 grams (25 millimoles) of diisobutylaluminum laurate in 20 milliliters of tetrahydrofuran, said diisobutylaluminum laurate being prepared from triisobutyl aluminum and lauric acid. After the addition was completed, the mixture was raised in temperature to room temperature and stirred at room temperature for additional 1 hour. Subsequently, 2.6 grams (25 millimoles) of 3-methoxypropionic acid was added, and the resulting mixture was allowed to stand at room temperature for 12 hours. The mixture became a viscous solution. This solution was reprecipitated in a large amount of hexane to yield 4.2 grams of a white organoaluminum polymer in a powder form.

The reduced viscosity of the polymer in a mixed solvent of equal weights of phenol and tetrachloroethane (concentration: 0.4 gram per deciliter; temperature: 30°C) was 0.97.

Example 8

In the same atmosphere and apparatus as used in Example 1, 0.45 gram (25 millimoles) of water was added to 50 milliliters of a benzene solution containing 5.8 grams (25 millimoles) of isopropoxy sec-butoxyaluminum propionate and reacted at room temperature for 1 hour. Subsequently, 9.0 grams (125 millimoles) of propionic acid was added and stirred at room temperature for 5 hours. Then the resulting mixture was poured into hexane and reprecipitated to yield 3.8 grams of a white polymer in a powder form.

The reduced viscosity of the polymer in a mixed solvent of equal weights of phenol and tetrachloroethane (concentration: 0.5 gram per deciliter; temperature: 30°C) was 0.83.

Example 9

In the same atmosphere and apparatus as used in Example 1, a mixed solvent of 58 millimoles of water and 20 milliliters of dioxane was added dropwise at 0°C to 11.7 grams (58 millimoles) of diethylaluminum 3-ethoxypropionate prepared from triethylaluminum and 3-ethoxypropionic acid, and reacted with each other.

Then, the reaction mixture was allowed to stand at room temperature for one day and night, and then poured into a large amount of hexane and reprecipitated to yield 9.2 grams of a product. This product was oligomer of poly(acyloxyalоxane) represented by

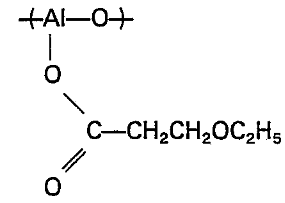

One gram ($6.2\times10^{-3}$ unit mole) of the oligomer was added into 10 milliliters of tetrahydrofuran, and was reacted with a prescribed amount of 3-ethoxypropionic acid at room temperature for 10 hours to obtain polymer product.

The polymer products was poured into a large amount of hexane and isolated by reprecipitation. The reduced viscosity of the polymer products were determined. The results obtained are shown in Table 1.

TABLE 1

| Run | [EPA]/ [Al unit][*1] | ηsp/c[*2] |
|---|---|---|
| 1 | 0.4 | 0.33 |
| 2 | 0.7 | 0.95 |
| 3 | 1.1 | 0.47 |

[*1] Molar ratio of 3-ethoxypropionic acid (EPA) to aluminum unit in the oligomer.

[*2] Reduced viscosity determined in a mixed solvent of equal weight of phenol and tetrahydrofuran (concentration: 0.4 gram per deciliter; temperature: 30°C).

Example 10

A mixture of 50 millimoles of ethylaluminum di-3-ethoxypropionate, which had been prepared from a molecular equivalent of triethylaluminum and two molecular equivalents of 3-ethoxypropionic acid, and 50 milliliters of toluene was placed in a three-necked flask equipped with a dropping funnel, a reflux condenser, and a three-way cock, and 10 milliliters of 1,4-dioxane solution containing 0.9 gram (50 millimoles) of distilled water and 1.18 grams (10 millimoles) of 3-ethoxypropionic acid were added dropwise and reacted at room temperature in a nitrogen atmosphere while stirring with a magnetic stirrer. In several hours, there was formed a uniform, clear and viscous solution. This solution showed a good spinnability, which was a measure of fiber-forming properties. The solution was poured into 500 milliliters of hexane and reprecipitated to yield 12.7 grams of a white organoaluminum polymer in a powder form.

The reduced viscosity of the polymer in a mixed solvent of equal weights of phenol and tetrachloroethane (concentration: 0.5 gram per deciliter; temperature: 30°C) was 0.76.

Example 11

To the viscous solution obtained in Example 10 was added 2.95 grams (25 millimoles) of 3-ethoxypropionic acid, and the resulting mixture was allowed to stand overnight at room temperature. The mixture became more viscous than before the addition of the acid. Thereafter, reprecipitation was carried out in the same manner as in Example 10 to yield 13.1 grams of an organoaluminum polymer.

The reduced viscosity of the polymer in the same solvent and under the same conditions as in Example 10 was 0.98.

Example 12

A mixture of 11.5 grams (50 milliliters) of isobutylaluminum dipropionate, which had been prepared by reacting a molecular equivalent of triisobutyl aluminum and two molecular equivalents of propionic acid, and 50 milliliters of tetrahydrofuran was placed in the same apparatus as used in Example 10, and 0.9 gram (50 millimoles) of water and 20 milliliters of a tetrahydrofuran solution containing 3.7 grams (50 millimoles) of propionic acid were added dropwise and reacted at 50°C while stirring. On maintaining the reaction mixture at 50°C for several hours, it became a viscous solution. The solution was poured into a large amount of hexane and reprecipitated to yield 11.4 grams of a white organoaluminum polymer in a powder form.

The reduced viscosity of the polymer in the same solvent and under the same conditions as in Example 10 was 1.8.

Example 13

A mixture of 24.2 grams (50 millimoles) of isopropoxyaluminum dilaurate, which had been prepared by reacting a molecular equivalent of aluminum isopropoxide and two molecular equivalents of lauric acid, and 100 milliliters of benzene was placed in the same apparatus as used in Example 10, and 1.1 grams (60 millimoles) of water was added dropwise and reacted at 80°C in a nitrogen atmosphere. Then, 5 grams (25 millimoles) of lauric acid was added, and the resulting mixture was stirred at 80°C for several hours and was further allowed to stand at room temperature for one day and night. The mixture became a uniform, viscous solution. The benzene was distilled off under reduced pressure, and the residue was washed with hexane and dried, yielding 21 grams of a white organoaluminum polymer in a resin form.

The reduced viscosity of the polymer in benzene (concentration: 0.5 gram per deciliter; temperature: 30°C) was 5.05.

Example 14

A mixture of 13.7 grams (50 millimoles) of isobutyl aluminum monopropionate mono-3-ethoxypropionate, which had been prepared by reacting a molecular equivalent of triisobutyl aluminum and a molecular equivalent of 3-ethoxypropionic acid, and 30 milliliters of tetrahydrofuran was placed in the same apparatus as used in Example 10, and 1.8 grams (100 millimoles) of water and 50 milliliters of a tetrahydrofuran solution containing 7.4 grams (100 millimoles) of propionic acid were added dropwise while stirring at room temperature. Then the mixture was stirred at room temperature for 10 hours to yield a viscous solution. This viscous solution was poured into a large amount of hexane and reprecipitated to obtain 10.5 grams of an organoaluminum polymer.

The reduced viscosity of the polymer in the same solvent and under the same conditions as in Example 10 was 1.3.

**Claims**

1. A process for producing a high molecular weight organoaluminum polymer by reacting at least one organoaluminum compound with water in the presence of organic acids at temperatures of not more than 200°C, characterised in that an organoaluminum compound represented by the general formula (I):

$$\begin{array}{c} X\text{—Al—}Y \\ | \\ OCOR^1 \end{array} \qquad (I)$$

(wherein X and Y may be the same or different and are each a hydrogen atom, an alkyl group, an alkoxy group, or an acyloxy group, and $R^1$ is an organic radical) is reacted with water and

a) an organic acid (excluded formic acid) is added during this reaction, or

b) an organic acid (excluded formic acid) is added after this reaction to the reaction system or to the polymer formed, or

c) a part of an organic acid (excluded formic acid) is added during this reaction and the remainder is added after completion of this reaction,

in an amount such that the total amount of the organic acid and the acyloxy group contained in the organoaluminum compound is from 1.2 to 11 moles per mole of the organoaluminum compound.

2. The process as claimed in claim 1, wherein the molar ratio of the water to the organoaluminum compound is from 1:1 to 3.5:1.

3. The process as claimed in claim 1 or 2, wherein the organoaluminum compound is a compound represented by the general formula (II):

$$\begin{array}{c} X\text{—Al—}OCOR^2 \\ | \\ OCOR^1 \end{array} \qquad (II)$$

(wherein X and $R^1$ are as defined above, and $R^2$ is an organic radical).

4. The process as claimed in claim 1 or 2, wherein the organoaluminum compound is a compound represented by the general formula (III):

$$\begin{array}{c} R^3COO-Al-OCOR^2 \\ | \\ OCOR^1 \end{array} \qquad (III)$$

(wherein $R^1$ and $R^2$ are as defined above, and $R^3$ is an organic radical).

**Patentansprüche**

1. Verfahren zur Herstellung eines Organo-Aluminium-Polymers mit hohem Molekulargewicht durch Reaktion wenigstens einer Organo-Aluminium-Verbindung mit Wasser in Gegenwart von organischen Säuren bie Temperaturen von nicht mehr als 200°C, dadurch gekennzeichnet daß eine Organo-Aluminium-Verbindung, dargestellt durch die allgemeine Formel (I):

$$\begin{array}{c} X-Al-Y \\ | \\ OCOR^1 \end{array} \qquad (I)$$

(worin X und Y gleich oder unterschiedlich sein können und jedes ein Wasserstoffatom, eine Alkylgruppe, eine Alkoxygruppe oder eine Acyloxygruppe sind, und $R^1$ ein organisches Radikal ist) mit Wasser umgesetzt wird und

a) eine organische Säure (ausgenommen Ameisensäure) während dieser Reaktion zugefügt wird, oder

b) eine organische Säure (ausgenommen Ameisensäure) nach dieser Reaktion zu dem Reaktionssystem oder zu dem gebildeten Polymer zugefügt wird, oder

c) ein Teil einer organischen Säure (ausgenommen Ameisensäure) während der Reaktion zugeführt wird und der Rest nach dem Ende dieser Reaktion hinzugefügt wird,

in einer solchen Menge, daß die Gesamtmenge der organischen Säure und der Acyloxygruppe, die in der Organo-Aluminium-Verbindung enthalten ist, von 1,2 bis 11 Mol pro Mol der Organo-Aluminium-Verbindung reicht.

2. Verfahren nach Anspruch 1, wobei das molare Verhältnis des Wassers zu der Organo-Aluminium-Verbindung von 1:1 bis 3,5:1 reicht.

3. Verfahren nach Anspruch 1 oder 2, worin die Organo-Aluminium-Verbindung eine Verbindung ist, dargestellt durch die allgemeine Formel (II):

$$\begin{array}{c} X-Al-OCOR^2 \\ | \\ OCOR^1 \end{array} \qquad (II)$$

(worin X und $R^1$ wie oben definiert sind, und $R^2$ ein organisches Radikal ist).

4. Verfahren nach Anspruch 1 oder 2, wobei die Organo-Aluminium-Verbindung eine Verbindung ist, dargestellt durch die allgemeine Formel (III):

$$\begin{array}{c} R^3COO-Al-OCOR^2 \\ | \\ OCOR^1 \end{array} \qquad (III)$$

(worin $R^1$ und $R^2$ wie oben definiert sind, und $R^3$ ein organisches Radikal ist).

**Revendications**

1. Procédé pour la préparation d'un polymère organoaluminique à haut poids moléculaire par réaction d'au moins un composé organoaluminique avec l'eau en présence d'acides organiques, à des températures n'excédant pas 200°C, caractérisé en ce que l'on fait réagir un composé organoaluminique représenté par la formule générale

$$\begin{array}{c} X-Al-Y \\ | \\ OCOR^1 \end{array} \qquad (I)$$

(dans laquelle X et Y peuvent être identiques ou différents et sont chacun un atome d'hydrogène, un groupe alkyle, un groupe alcoxy ou un groupe acyloxy, et $R^1$ est un radical organique) avec de l'eau et

a) on ajoute au cours de cette réaction un acide organique (à l'exclusion de l'acide formique), ou

b) on ajoute après cette réaction un acide organique (à l'exclusion de l'acide formique) au système réactionnel ou au polymère formé, ou

c) on ajoute au cours de cette réaction une partie d'un acide organique (à l'exclusion de l'acide formique) et on ajoute le reste après l'achèvement de cette réaction,

en une quantité telle que la quantité totale de l'acide organique et des groupes acyloxy contenus dans le composé organoaluminique aille de 1,2 à 11 moles, par mole du composé organoaluminique.

2. Procédé selon la revendication 1, dans lequel le rapport molaire de l'eau au composé organoaluminique va de 1:1 à 3,5:1.

3. Procédé selon la revendication 1 ou 2, dans lequel le composé organoaluminique est un composé représenté par la formule générale (II):

$$\begin{array}{c} X-Al-OCOR^2 \\ | \\ OCOR^1 \end{array} \qquad (II)$$

(dans laquelle X et $R^1$ sont tels que définis plus haut et $R^2$ est un radical organique).

4. Procédé selon la revendication 1 ou 2, dans lequel le composé organoaluminique est un composé représenté par la formule générale (III):

$$\begin{array}{c} R^3COO-Al-OCOR^2 \\ | \\ OCOR^1 \end{array} \qquad (III)$$

(dans laquelle $R^1$ et $R^2$ sont tels que définis plus haut, et $R^3$ est un radical organique).